# EUROPEAN PATENT APPLICATION

(11) **EP 3 644 559 A1**
(43) Date of publication of application: **29.04.2020**
(21) Application number: 18846339.2
(22) Date of filing: 08.08.2018
(51) Int. Cl.: H04L 12/46

(54) **METHOD FOR TRANSMITTING PACKET, FORWARDING DEVICE, CONTROLLER, AND SYSTEM**

(30) Priority: 15.08.2017 CN 201710701414
(71) Applicant: Huawei Technologies Co., Ltd., Longgang District Shenzhen, Guangdong 518129 (CN)
(72) Inventor: ZENG, Wanmei, Shenzhen Guangdong 518129 (CN); GAO, Yuan, Shenzhen Guangdong 518129 (CN); GAO, Jun, Shenzhen Guangdong 518129 (CN); ZHOU, Dongchen, Shenzhen Guangdong 518129 (CN); TAO, Dongcheng, Shenzhen Guangdong 518129 (CN)
(74) Representative: Grünecker Patent- und Rechtsanwälte PartG mbB
(86) International application number: PCT/CN2018/099281
(87) International publication number: WO 2019/033964

(57) **Abstract**

Embodiments of this application disclose a packet transmission method, a forwarding device, a controller, and a system. The method includes: receiving, by a forwarding device through a port, a protocol packet from another forwarding device or user equipment; performing, by the forwarding device, virtual extensible local area network VXLAN encapsulation on the protocol packet to generate a first VXLAN packet, where the first VXLAN packet includes the protocol packet and the port information; and sending, by the forwarding device, the first VXLAN packet to the controller. By using the embodiments of this application, a protocol packet transmission and a protocol packet processing speed can be improved, thereby improving overall system performance.

## Description

This application claims priority to Chinese Patent Application No. 201710701414.0, filed with the Chinese Patent Office on August 15, 2017 and entitled "PACKET TRANSMISSION METHOD, FORWARDING DEVICE, CONTROLLER, AND SYSTEM", which is incorporated herein by reference in its entirety.

### TECHNICAL FIELD

This application relates to the field of communications technologies, and in particular, to a packet transmission method, a forwarding device, a controller, and a system.

### BACKGROUND

Software-defined networking (English: Software Defined Networking, SDN) based on control and forwarding separation includes a controller and a forwarding device. The controller and the forwarding device communicate with each other by using a control channel protocol, to complete message exchange and information transmission. An OpenFlow (English: OpenFlow) protocol is a mainstream control channel protocol between a forwarding device and a controller. The OpenFlow control channel protocol requires transmission of a large quantity of information, for example, a service resource, a service attribute, a service event, and other information (such as interface information, device information, QoS information, and VPN information) that are reported by the forwarding device to the controller, a flow entry delivered by the controller to the forwarding device, and a protocol packet (such as an address resolution protocol (English: Address Resolution Protocol, ARP)/Internet control message protocol (English: Internet Control Message Protocol (ICMP)/Internet group management protocol (English: Internet Group Management Protocol, IGMP)/dynamic host configuration protocol (English: Dynamic Host Configuration Protocol, DHCP)) that is reported and delivered between the forwarding device and the controller.

According to a practical test, when a large quantity of information is transmitted by using the OpenFlow protocol between the forwarding device and the controller, a performance problem exists, and a transmission speed and a processing speed are relatively low.

### SUMMARY

A technical problem to be resolved in embodiments of this application is to provide a packet transmission method, a forwarding device, a controller, and a system, to improve a protocol packet transmission speed and a protocol packet processing speed, thereby improving overall system performance.

According to a first aspect, an embodiment of this application provides a packet transmission method, and the method may include:
receiving, by a forwarding device through a port, a protocol packet from another forwarding device or user equipment;
performing, by the forwarding device, virtual extensible local area network (VXLAN) encapsulation on the protocol packet to generate a first VXLAN packet, where the first VXLAN packet includes the protocol packet and port information of the port; and
sending, by the forwarding device, the first VXLAN packet to the controller.

A VXLAN tunnel is used to transmit a protocol packet. Forwarding is separated from control. A tight coupling between a forwarding plane and a control plane is broken, thereby facilitating separate flexible expansion of the forwarding plane and the control plane without constraints of each other, and simplifying operation and maintenance. The forwarding plane may be implemented by using hardware. A packet processing speed may be improved by using high-performance hardware. Therefore, a user access speed and user experience are improved.

In a possible implementation, the performing, by the forwarding device, VXLAN encapsulation on the protocol packet to generate a first VXLAN packet includes:
generating, by the forwarding device, a VXLAN header and an extension header, where the VXLAN header includes a flag bit and length information, the flag bit indicates that the extension header is added behind the VXLAN header, the length information indicates a length of the extension header, and the extension header is used to carry the port information; and encapsulating the protocol packet based on the VXLAN header and the extension header to generate the first VXLAN packet, where a payload field of the first VXLAN packet carries the protocol packet; or
encapsulating, by the forwarding device, the protocol packet to generate the first VXLAN packet, where a payload field of the first VXLAN packet carries the port information and the protocol packet.

Two manners of carrying the protocol packet and the port information are provided. In a manner of generating a VXLAN header in a new format and adding an extension header, based on the foregoing configuration and extension, the forwarding device and the controller can use the VXLAN tunnel to transmit the protocol packet.

In a possible implementation, the method further includes:
receiving, by the forwarding device, a second VXLAN packet from the controller, where the second VXLAN packet includes a protocol response packet and the port information;
performing, by the forwarding device, VXLAN decapsulation on the second VXLAN packet to obtain the protocol response packet and the port information that are included in the second VXLAN packet; and
forwarding, by the forwarding device, the protocol response packet through the port based on the port information.

The VLXAN tunnel is used to transmit a protocol response packet. A response speed and system performance are improved.

In a possible implementation, the method further includes:
establishing, by the forwarding device, a VXLAN tunnel with the controller, where the VXLAN tunnel serves as a transmission path of the protocol packet and the protocol response packet.

In a possible implementation, the establishing, by the forwarding device, a VXLAN tunnel with the controller includes:
negotiating, by the forwarding device, tunnel information of the VXALN tunnel with the controller by using an OpenFlow protocol, and establishing the VXLAN tunnel based on the negotiated tunnel information, where the tunnel information includes address information of a source VXLAN tunnel end point, address information of a destination VXLAN tunnel end point, and a VXLAN network identifier; or
establishing, by the forwarding device, the VXLAN tunnel through configuration.

In a possible implementation, the port is a port that is on the forwarding device and that is configured to transmit a protocol packet by using the VXLAN tunnel.

A specific manner of establishing the VXLAN tunnel is provided, to facilitate an implementation of transmitting the protocol packet between the forwarding device and the controller by using the VXLAN tunnel.

According to a second aspect, an embodiment of this application provides a packet transmission method, and the method may include:
receiving, by a controller, a first virtual extensible local area network (VXLAN) packet sent by a forwarding device, where the first VXLAN packet includes a protocol packet and port information, and the port information indicates a port through which the forwarding device receives the protocol packet; and
performing, by the controller, VXLAN decapsulation on the first VXLAN packet to obtain the protocol packet and the port information that are included in the first VXLAN packet.

In a possible implementation, the method further includes:
generating, by the controller, a protocol response packet based on the protocol packet, and performing VXLAN encapsulation on the protocol response packet to generate a second VXLAN packet, where the second VXLAN packet carries the port information and the protocol response packet; and
sending, by the controller, the second VXLAN packet to the forwarding device.

In a possible implementation, the generating, by the controller, a protocol response packet based on the protocol packet, and performing VXLAN encapsulation on the protocol response packet to generate a second VXLAN packet includes:
generating, by the controller, the protocol response packet, a VXLAN header, and an extension header based on the protocol packet, where the VXLAN header includes a flag bit and length information, the flag bit indicates that the extension header is added behind the VXLAN header, the length information indicates a length of the extension header, and the extension header is used to carry the port information; and encapsulating the protocol response packet based on the VXLAN header and the extension header to generate the second VXLAN packet, where a payload field of the second VXLAN packet carries the protocol response packet; or
generating, by the controller, the protocol response packet based on the protocol packet, and encapsulating the protocol response packet to generate the second VXLAN packet, where a payload field of the second VXLAN packet carries the port information and the protocol packet.

In a possible implementation, the method further includes:
establishing, by the controller, a VXLAN tunnel with the forwarding device, where the VXLAN tunnel serves as a transmission path of the protocol packet and the protocol response packet.

In a possible implementation, the establishing, by the controller, a VXLAN tunnel with the forwarding device includes:
negotiating, by the controller, tunnel information of the VXALN tunnel with the forwarding device by using an OpenFlow protocol, and establishing the VXLAN tunnel based on the negotiated tunnel information, where the tunnel information includes address information of a source VXLAN tunnel end point, address information of a destination VXLAN tunnel end point, and a VXLAN network identifier; or
establishing, by the controller, the VXLAN tunnel through configuration.

According to a third aspect, an embodiment of this application provides a forwarding device, and the device may include:
a transceiver unit, configured to receive a protocol packet from another forwarding device or user equipment through a port; and
a processing unit, configured to perform virtual extensible local area network (VXLAN) encapsulation on the protocol packet to generate a first VXLAN packet, where the first VXLAN packet includes the protocol packet and port information of the port, where
the transceiver unit is further configured to send the first VXLAN packet to the controller.

In a possible implementation, the processing unit is configured to:
generate a VXLAN header and an extension header, where the VXLAN header includes a flag bit and length information, the flag bit indicates that the extension header is added behind the VXLAN header, the length information indicates a length of the extension header, and the extension header is used to carry the port information; and encapsulate the protocol packet based on the VXLAN header and the extension header to generate the first VXLAN packet, where a payload field of the first VXLAN packet carries the protocol packet; or
encapsulate the protocol packet to generate the first VXLAN packet, where a payload field of the first VXLAN packet carries the port information and the protocol packet.

In a possible implementation, the receiving unit is further configured to receive a second VXLAN packet from the controller, where the second VXLAN packet includes a protocol response packet and the port information;
the processing unit is further configured to perform VXLAN decapsulation on the second VXLAN packet to obtain the protocol response packet and the port information that are included in the second VXLAN packet; and
the receiving unit is further configured to forward the protocol response packet through the port based on the port information.

In a possible implementation, the processing unit is further configured to:
establish a VXLAN tunnel with the controller, where the VXLAN tunnel serves as a transmission path of the protocol packet and the protocol response packet.

In a possible implementation, the processing unit is configured to:
negotiate tunnel information of the VXALN tunnel with the controller by using an OpenFlow protocol, and establish the VXLAN tunnel based on the negotiated tunnel information, where the tunnel information includes address information of a source VXLAN tunnel end point, address information of a destination VXLAN tunnel end point, and a VXLAN network identifier; or
establish the VXLAN tunnel through configuration.

In a possible implementation, the port is a port that is on the forwarding device and that is configured to transmit a protocol packet by using the VXLAN tunnel.

According to a fourth aspect, an embodiment of this application provides a controller, and the controller may include:
a transceiver unit, configured to receive a first virtual extensible local area network VXLAN packet sent by a forwarding device, where the first VXLAN packet includes a protocol packet and port information, and the port information indicates a port through which the forwarding device receives the protocol packet; and
a processing unit, configured to perform VXLAN decapsulation on the VXLAN packet to obtain the protocol packet and the port information that are included in the VXLAN packet.

In a possible implementation, the processing unit is further configured to: generate a protocol response packet based on the protocol packet, and perform VXLAN encapsulation on the protocol response packet to generate a second VXLAN packet, where the second VXLAN packet carries the port information and the protocol response packet; and
the transceiver unit is further configured to send the second VXLAN packet to the forwarding device.

In a possible implementation, the processing unit is configured to:
generate the protocol response packet, a VXLAN header, and an extension header based on the protocol packet, where the VXLAN header includes a flag bit and length information, the flag bit indicates that the extension header is added behind the VXLAN header, the length information indicates a length of the extension header, and the extension header is used to carry the port information; and encapsulate the protocol response packet based on the VXLAN header and the extension header to generate the second VXLAN packet, where a payload field of the second VXLAN packet carries the protocol response packet; or
generate the protocol response packet based on the protocol packet, and encapsulate the protocol response packet to generate the second VXLAN packet, where a payload field of the second VXLAN packet carries the port information and the protocol packet.

In a possible implementation, the processing unit is further configured to:
establish a VXLAN tunnel with the forwarding device, where the VXLAN tunnel serves as a transmission path of the protocol packet and the protocol response packet.

In a possible implementation, the processing unit is configured to:
negotiate tunnel information of the VXALN tunnel with the forwarding device by using an OpenFlow protocol, and establish the VXLAN tunnel based on the negotiated tunnel information, where the tunnel information includes address information of a source VXLAN tunnel end point, address information of a destination VXLAN tunnel end point, and a VXLAN network identifier; or
establish the VXLAN tunnel through configuration.

According to a fifth aspect, an embodiment of this application provides a system, applied to a network in which control is separated from forwarding. The system includes:
the forwarding device according to the second aspect of the embodiments of this application or any one of the implementations of the second aspect; and
the controller according to the fourth aspect of the embodiments of this application or any one of the implementations of the fourth aspect.

According to a sixth aspect, an embodiment of this application provides a forwarding device, including:
a processor, a memory, and a bus, where the processor and the memory are connected by using the bus, the memory is configured to store a group of program code, and the processor is configured to invoke the program code stored in the memory to execute the step according to the first aspect of the embodiments of this application or any one of the implementations of the first aspect.

According to a seventh aspect, an embodiment of this application provides a controller, and the controller may include:
a processor, a memory, and a bus, where the processor and the memory are connected by using the bus, the memory is configured to store a group of program code, and the processor is configured to invoke the program code stored in the memory to execute the step according to the second aspect of the embodiments of this application or any one of the implementations of the second aspect.

According to an eighth aspect, an embodiment of this application provides a computer-readable storage medium. The computer-readable storage medium stores an instruction. When the instruction is run on a computer, the method in the first aspect or any possible implementation of the first aspect is implemented.

According to a ninth aspect, an embodiment of this application provides a computer-readable storage medium. The computer-readable storage medium stores an instruction. When the instruction is run on a computer, the method in the second aspect or any possible implementation of the second aspect is implemented.

### BRIEF DESCRIPTION OF DRAWINGS

To describe the technical solutions in the embodiments of this application or in the background more clearly, the following briefly describes the accompanying drawings required for describing the embodiments of this application or the background.
FIG. 1 is a schematic diagram of an architecture of a virtual broadband remote access server according to an embodiment of this application;
FIG. 2 is a schematic flowchart of a packet transmission method according to an embodiment of this application;
FIG. 3 is a schematic flowchart of another packet transmission method according to an embodiment of this application;
FIG. 4 is a schematic flowchart of still another packet transmission method according to an embodiment of this application;
FIG. 5 is a schematic flowchart of still another packet transmission method according to an embodiment of this application;
FIG. 6 is a schematic flowchart of still another packet transmission method according to an embodiment of this application;
FIG. 7 is a schematic flowchart of still another packet transmission method according to an embodiment of this application;
FIG. 8 is a schematic diagram of composition of a forwarding device according to an embodiment of this application;
FIG. 9 is a schematic diagram of composition of another forwarding device according to an embodiment of this application;
FIG. 10 is a schematic diagram of composition of a controller according to an embodiment of this application; and
FIG. 11 is a schematic diagram of composition of another controller according to an embodiment of this application.

### DESCRIPTION OF EMBODIMENTS

The following describes the embodiments of this application with reference to the accompanying drawings in the embodiments of this application. The terms "includes", "has", or any other variant thereof mentioned in this specification, the claims, and the accompanying drawings of this application are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

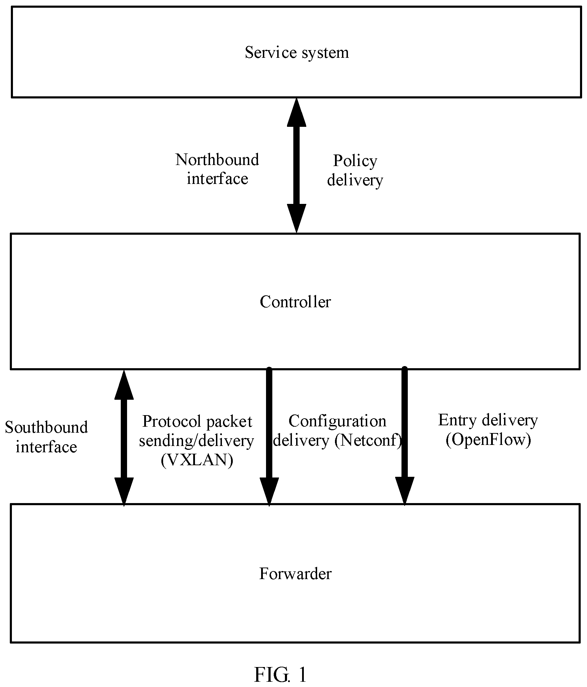

FIG. 1 is a schematic diagram of an architecture of a virtual broadband remote access server (English: virtual Broadband Remote Access Server, vBRAS) according to an embodiment of the present invention. The vBRAS architecture may be divided into three parts from top to bottom: a service system, a controller, and a forwarding device.

The service system mainly performs various processing on a received service and performs policy delivery, and may also include an element management system to manage network elements.

The controller is a control network element of a broadband remote access server (English: Broadband Remote Access Server, BRAS), and may also be referred to as a BRAS-CP. The BRAS-CP is defined as a user control management component, deployed in a core of telecom infrastructure cloud (English: Telecom infrastructure Cloud, TIC), and is responsible for user access management, authentication and accounting, a user session, policy management, and the like.

The forwarding device is a forwarding network element of the BRAS, and may also be referred to as a forwarder or a BRAS-UP. The forwarding device is defined as a user policy execution component that is located on an L3 network edge, is deployed on a TIC edge, and is responsible for traffic forwarding, user traffic control, and the like.

A protocol packet, namely a network control protocol packet, is usually used to carry various information related to network control. The protocol packet is different from a user data packet. The user data packet is used to carry traffic of various applications used by a user. A routing device is used as an example. A protocol packet transmitted by the routing device may include various network protocols or routing control protocols. For example, a common existing protocol packet includes protocol packets such as, an ARP, an ICMP, an IGMP, a DHCP, an interior gateway protocol (English: Interior Gateway Protocol, IGP), a border gateway protocol (Border Gateway Protocol, BGP), a label distribution protocol (Label Distribution Protocol, LDP). The IGMP protocol is used as an example. An IGMP protocol packet is used to transmit control information between an Internet protocol (English: Internet Protocol, IP) host and a router. The control information may indicate information about a network, for example, whether the network can be accessed, whether the host is accessible, or whether the router is available. The control information does not transmit the user data, but plays an important role in controlling user data transmission.

There are three types of southbound interfaces between the controller and the forwarding device.

An interface for sending/delivering a protocol packet may use a VXLAN tunnel to send and deliver the protocol packet.

A configuration delivery interface may use a Netconf protocol, so that a centralized controller implements unified automatic configuration for a plurality of forwarding devices.

An entry delivery interface may use an OpenFlow protocol to implement a requirement of the controller for delivering a user entry of the forwarding device, so that the controller implements unified management and control for actions of the forwarding device.

An upward northbound interface of the controller serves as a unified external interface of an entire system in which control is separated from forwarding, and is mainly used to complete a connection to a system such as the service system or the network element management system and implement that the service system performs unified invocation of a vBRAS capability.

A user may be connected to a forwarding device on the TIC edge by using an access stratum, and then access the forwarding device. Therefore, a user online protocol packet may be transmitted to the controller by using the VXLAN tunnel.

It should be noted that in the foregoing architecture, there may be a plurality of controllers, and each controller may also perform information transmission with a plurality of forwarding devices. An existing protocol packet transmission manner cannot cope with a scenario of a relatively large quantity of protocol packets. Therefore, in this application, a VXLAN tunnel is used to transmit a protocol packet, thereby improving processing efficiency and a user access speed. The VXLAN tunnel is used to transmit a protocol packet. In addition, another Internet protocol (Internet Protocol, IP) tunnel such as a generic routing encapsulation (English: Generic Routing Encapsulation, GRE) tunnel may be used to transmit the protocol packet. This is not limited in this embodiment of this application.

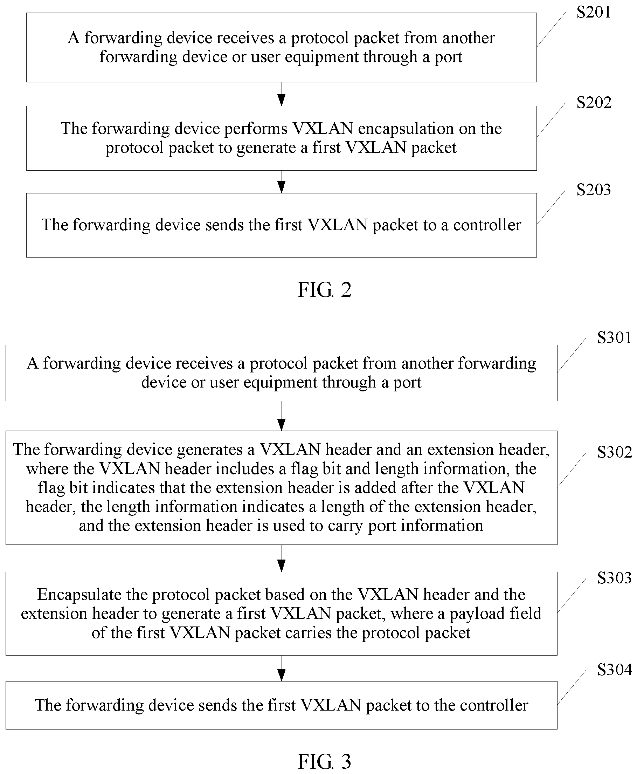

The following uses the VXLAN tunnel as an example to describe in detail a packet transmission method in this application with reference to FIG. 2 to FIG. 6.

FIG. 2 is a schematic flowchart of a packet transmission method according to an embodiment of this application. The method is applied to a network based on control and forwarding separation (CU separation), and includes but is not limited to the following steps.

S201. A forwarding device receives a protocol packet from another forwarding device or user equipment through a port.

The port is a port that is on the forwarding device and that is configured to transmit a protocol packet by using a VXLAN tunnel. The port may be one of a plurality of ports on the forwarding device and be configured as a port dedicated to transmit the protocol packet to the controller by using the VXLAN tunnel. When receiving information from the port, the forwarding device may check to determine that the information is a protocol packet. Alternatively, a normal working mode and a working mode of control and forwarding separation may be configured for a port on the forwarding device. When the port is in the normal working mode, the protocol packet is still transmitted by using an OpenFlow channel. When the port is in the mode of control and forwarding separation, the protocol packet may be transmitted by using the VXLAN tunnel, and an identifier indicating the protocol packet may be attached to the received information. This is not limited in this embodiment of this application.

S202. The forwarding device performs virtual extensible local area network VXLAN encapsulation on the protocol packet to generate a first VXLAN packet.

The first VXLAN packet includes the protocol packet and port information of the port. The port information may be used to indicate a port through which the forwarding device receives the protocol packet.

When performing VXLAN encapsulation, the forwarding device may obtain encapsulation information of the VXLAN tunnel between the forwarding device and the controller. The encapsulation information may include address information of a source VXLAN tunnel end point and address information of a destination VXLAN tunnel end point.

If the port information is not carried when VXLAN encapsulation is performed, the controller cannot obtain a port from which the protocol packet is received by the forwarding device, and cannot exchange information, such as a response or subsequent delivery of other information, with the another forwarding device or the user equipment that sends the protocol packet. Therefore, when the VXLAN encapsulation is performed, the protocol packet and the port information can be both carried.

Optionally, before the steps S201 and S202, a step in which the forwarding device establishes the VXLAN tunnel with the controller may be further included. The established VXLAN tunnel may serve as a transmission path of the protocol packet and a protocol response packet.

Optionally, the forwarding device may establish the VXLAN tunnel with the controller in any one of the following manners.
(1) A VXLAN tunnel is established on an OpenFlow data plane through negotiation. The OpenFlow protocol may be extended. When a capability of the forwarding device is obtained by using the OpenFlow protocol, whether the forwarding device supports sending and delivering a protocol packet to the controller by using the VXLAN tunnel is obtained.
   If the forwarding device and the controller both support transmitting a protocol packet by using the VXLAN tunnel, the forwarding device may negotiate tunnel information of the VXALN tunnel with the controller by using the OpenFlow protocol, and establish the VXLAN tunnel based on the negotiated tunnel information. The tunnel information includes address information of a source VXLAN tunnel end point (VTEP), address information of a destination VXLAN tunnel end point, and a VXLAN network identifier.
(2) A VXLAN tunnel is established on an OpenFlow data plane through configuration. The VXLAN tunnel is established through static configuration on the forwarding device and the controller, and the VXLAN tunnel is associated with a function used to transmit a protocol packet in an OpenFlow protocol, so that the VXLAN tunnel may be used as a transmission path of the protocol packet.

S203. The forwarding device sends the first VXLAN packet to a port of the controller.

The first VXLAN packet includes the protocol packet and the port information port. Therefore, after performing decapsulation, the controller may obtain the protocol packet and the port information, and determine, based on a VNI that has a mapping relationship with the forwarding device, that the VNI is a VNI of a protocol packet sending service, thereby entering a corresponding service procedure for processing. The port information may be used to confirm a response message such as a delivery port of the protocol response packet, or may be stored in an entry for subsequent information exchange with a port corresponding to the port information. Then the protocol packet may be encapsulated and sent to a control plane for processing.

In this embodiment, the VXLAN tunnel is used to transmit the protocol packet. Forwarding is separated from control. A tight coupling between a forwarding plane and a control plane is broken, thereby facilitating separate flexible expansion of the forwarding plane and the control plane without constraints of each other, and simplifying operation and maintenance. The forwarding plane may be implemented by using hardware. A packet processing speed may be improved by using high-performance hardware. Therefore, a user access speed and user experience are improved. In addition, a VXLAN header is configured and extended. In this way, transmission performed by using a VXLAN tunnel is implemented. This is compatible with an existing VXLAN header, which is easy for implementation.

FIG. 3 is a schematic flowchart of another packet transmission method according to an embodiment of this application. Step S301 is the same as step S201. Step S304 is the same as step S203. Details are not described herein again. In this embodiment, that the forwarding device performs VXLAN encapsulation on the protocol packet to generate a first VXLAN packet may be specifically implemented in a manner of the following steps.

S302. The forwarding device generates a VXLAN header and an extension header, where the VXLAN header includes a flag bit and length information, the flag bit indicates that the extension header is added after the VXLAN header, the length information indicates a length of the extension header, and the extension header is used to carry the port information.

S303. Encapsulate the protocol packet based on the VXLAN header and the extension header to generate the first VXLAN packet, where a payload field of the first VXLAN packet carries the protocol packet.

The VXLAN header may also be referred to as a VXLAN packet header. When the VXLAN header is generated, a conventional VXLAN header format may be modified. A conventional VXLAN header includes eight bytes (byte) in total. One byte is VXLAN Flags, namely, a VALAN identifier, followed by a reserved bit (Reserved) with three bytes. A network identifier (VNI) occupies three bytes, and a byte following the network identifier is a reserved bit. The conventional VXLAN header format is as follows:

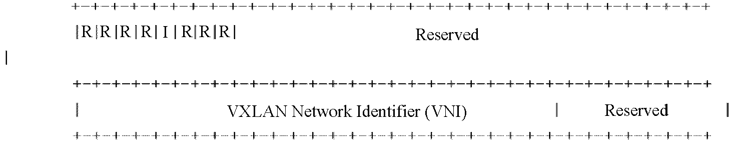

The byte occupied by |R|R|R|R|I|R|R|R| is eight bits in total and is referred to as a VXLAN flag (VXLAN Flags). In a binary system, R represents a reserved bit, and a binary value of R is 0; I represents a used bit, and a binary value of I is 1. The VXLAN flag is modified, so that the conventional VXLAN header can be distinguished from another VXLAN header. For example, in this embodiment of this application, the conventional VXLAN header may be modified, and the length information of the extension header is carried in the reserved bit of the conventional VXLAN header. Then the modified VXLAN flag may be used to indicate that the modified VXLAN header carries the information of the extension header. For example, the conventional VXLAN header may be modified to the following format:

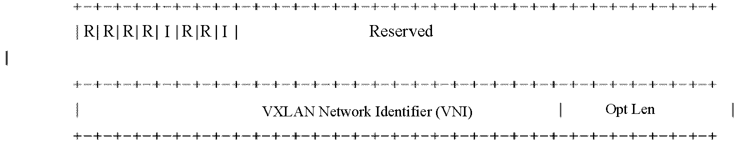

To be specific, if an eighth bit of the VXLAN flag is set to 1, and R is changed to I, it indicates that the VXLAN header carries the information of the extension header, so that the modified VXLAN flag is distinguished from the VXLAN flag of the conventional VXLAN header. Further, a bit corresponding to a reserved bit at the eighth bit, namely, the last byte carries Opt Len information, namely, the length information of the extension header. In this way, data included in the extension header such as port information can be directly located based on a byte location and the length information.

The foregoing provides an example in which the eighth bit in the VXLAN flag and the eighth reserved bit in the conventional VXLAN header are used for configuration. Certainly, another reserved bit in the VXLAN flag and another reserved bit in the VXLAN header may also be used for configuration. A configuration manner is similar. Details are not described herein again.

For the extension header, the format may be as follows:

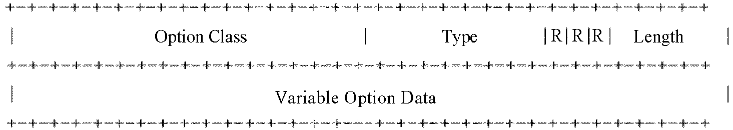

Herein, Option Class is a namespace field of Type;
Type is a type identifier of the extension header;
Length indicates a length of data carried in the extension header; and
Variable Option Data identifies data carried in the extension header.

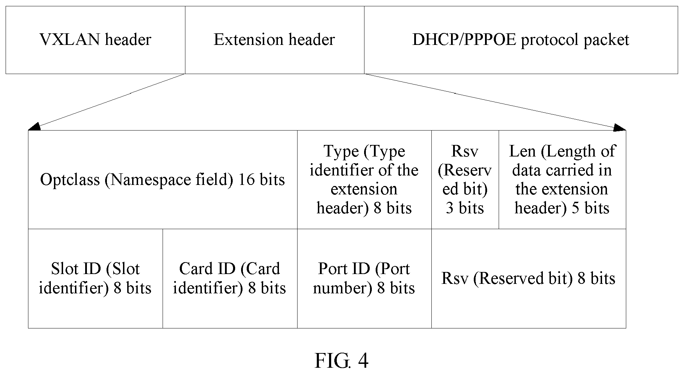

Optionally, FIG. 4 is a schematic diagram of a head structure according to an embodiment of this application. The head structure includes a VXLAN header (VXLAN Herder), an extension header (ExtHeader), and a DHCP/point-to-point protocol over Ethernet (English: Point to Point Protocol over Ethernet, PPPOE) protocol packet (DHCP/PPPOE Protocol Packet).

The extension header (ExtHeader) may be used as a private interworking header between a forwarding device and a controller. The extension header may successively include a namespace field (Optclass) of Type, 16 bits; a type identifier (Type) of the extension header, 8 bits; a reserved bit (Rsv), 3 bits; a length (Len) of data carried in the extension header, 5 bits; a slot identifier (Slot ID), 8 bits; a card identifier (Card ID), 8 bits; a port number (Port ID), 8 bits; and a reserved bit (Rsv), 8 bits. In other words, the foregoing Variable Option Data indicates that the data carried in the extension header includes a slot identifier, a card identifier, and a port number. The slot identifier, the card identifier, and the port number are respectively used to identify a slot on the forwarding device, a card inserted in the slot, and a port on the card.

Optionally, the extension header may further carry type information of a protocol packet. Therefore, during decapsulation, a controller may directly obtain a type of the protocol packet without parsing the protocol packet, thereby improving system performance.

Optionally, the extension header is added to carry the port information, and a VXLAN header in a new format is generated to indicate the information of the extension header. In addition, the forwarding device may encapsulate the protocol packet to generate the first VXLAN packet, where the payload field of the first VXLAN packet carries the port information and the protocol packet. In this way, the protocol packet can be transmitted by using a VXLAN tunnel.

In this embodiment, a specific manner of configuring a VXLAN header and adding an extension header is described. Based on the foregoing configuration and extension, the VXLAN tunnel can be used to transmit the protocol packet between the forwarding device and the controller.

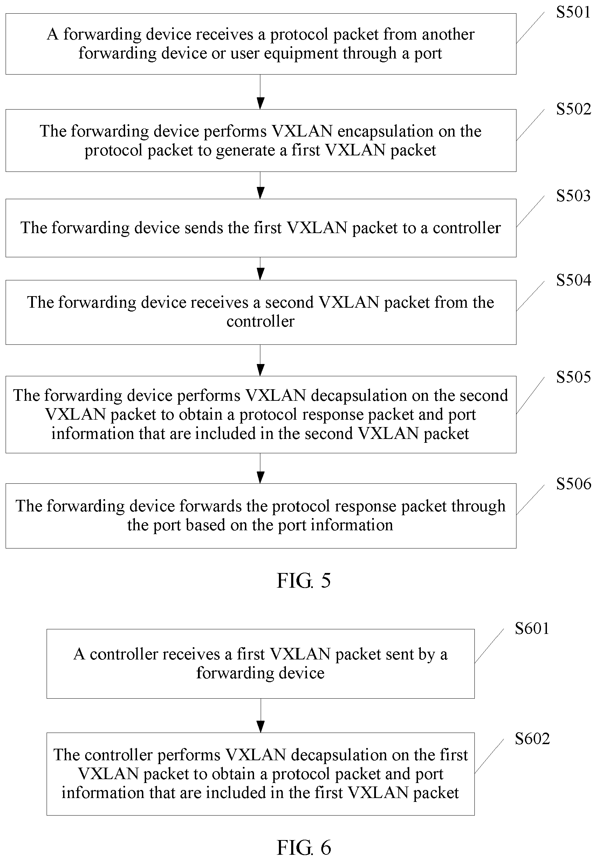

FIG. 5 is a schematic flowchart of still another packet transmission method according to an embodiment of this application. Steps S501 to S503 are the same as steps S201 to S203. Details are not described herein again. In this embodiment, the method may further include but is not limited to the following steps:
S504. The forwarding device receives a second VXLAN packet from the controller.

The second VXLAN packet includes a protocol response packet and the port information.

S505. The forwarding device performs VXLAN decapsulation on the second VXLAN packet to obtain the protocol response packet and the port information that are included in the second VXLAN packet.

S506. The forwarding device forwards the protocol response packet through the port based on the port information.

The protocol response packet corresponds to the protocol packet, and is a response to the protocol packet after the controller receives the protocol packet sent by the forwarding device.

Optionally, the forwarding device may obtain a VXLAN network identifier in the second VXLAN packet, determine that the VXLAN network identifier is a VXLAN network identifier of a protocol packet delivery service, and then forward the protocol packet to the port based on the port information.

When a packet is transmitted, for the forwarding device, when the forwarding device receives the protocol packet sent by another forwarding device or user equipment, the port may also be referred to as an ingress port; for the controller, when the controller sends the protocol response packet to the forwarding device, the port may also be referred to as an egress port.

FIG. 6 is a schematic flowchart of still another packet transmission method according to an embodiment of this application. The method may include but is not limited to the following steps.

S601. A controller receives a first virtual extensible local area network VXLAN packet sent by a forwarding device.

The first VXLAN packet includes a protocol packet and port information of a port through which the forwarding device receives the protocol packet.

S602. The controller performs VXLAN decapsulation on the first VXLAN packet to obtain the protocol packet and the port information that are included in the first VXLAN packet.

The port information indicates a port through which the forwarding device receives the protocol packet. The transmission of the VXLAN packet includes that the forwarding device sends the VXLAN packet to the controller, and the controller delivers the VXLAN packet to the forwarding device. The sending and the delivering may be implemented by using a port indicated by the port information.

Optionally, when performing VXLAN decapsulation on the first VXLAN packet, the controller may further obtain a VXLAN network identifier included in the first VXLAN packet, to determine that the VXLAN network identifier is a VXLAN network identifier of a protocol packet sending service.

Then, based on the VXLAN network identifier, the protocol packet is sent to a control plane for processing.

Optionally, before step S601, the method may further include a step in which the controller establishes a VXLAN tunnel with the forwarding device. The established VXLAN tunnel may serve as a transmission path of the protocol packet and the protocol response packet.

Optionally, that the controller establishes a VXLAN tunnel with the forwarding device includes:
negotiating, by the controller, tunnel information of the VXALN tunnel with the forwarding device by using an OpenFlow protocol, and establishing the VXLAN tunnel based on the negotiated tunnel information, where the tunnel information includes address information of a source VXLAN tunnel end point, address information of a destination VXLAN tunnel end point, and a VXLAN network identifier; or
establishing, by the controller, the VXLAN tunnel through configuration, where the VXLAN tunnel serves as a transmission path of the protocol packet.

A manner in which the controller establishes a VXLAN tunnel is basically the same as a manner used on the forwarding device. For details, refer to the description of step S202 in the embodiment shown in FIG. 2. Details are not described herein again.

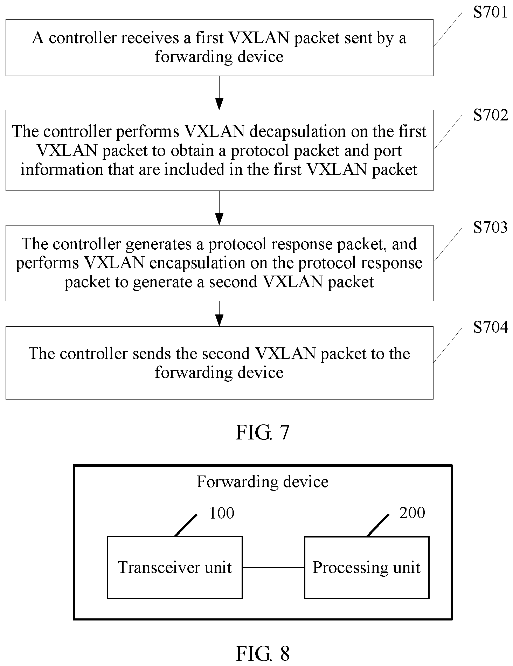

FIG. 7 is a schematic flowchart of still another packet transmission method according to an embodiment of this application. Herein, S701 to S702 are the same as S601 to S602. Details are not described herein again. The method may further include but is not limited to the following steps.

S703. The controller generates a protocol response packet based on the protocol packet, and performs VXLAN encapsulation on the protocol response packet to generate a second VXLAN packet, where the second VXLAN packet carries the port information and the protocol response packet.

Optionally, that the controller generates a protocol response packet, and performs VXLAN encapsulation on the protocol response packet to generate a second VXLAN packet may include:
generating, by the controller, the protocol response packet, a VXLAN header, and an extension header based on the protocol packet, where the VXLAN header includes a flag bit and length information, the flag bit indicates that the extension header is added behind the VXLAN header, the length information indicates a length of the extension header, and the extension header is used to carry the port information; and encapsulating the protocol response packet based on the VXLAN header and the extension header to generate the second VXLAN packet, where a payload field of the second VXLAN packet carries the protocol response packet; or
generating, by the controller, the protocol response packet based on the protocol packet, and encapsulating the protocol response packet to generate the second VXLAN packet, where a payload field of the second VXLAN packet carries the port information and the protocol packet.

A manner in which the controller generates a VXLAN header in a new format and adds an extension header is basically the same as a manner used on the forwarding device. For details, refer to the description of the embodiment shown in FIG. 3. Details are not described herein again.

S704. The controller sends the second VXLAN packet to the forwarding device.

Optionally, the controller may further carry board selection information in a sent packet header, to determine a sent physical board. It should be noted that the method in the foregoing steps S703 to S704 may be applied to give a response to a received protocol packet, and may also be applied in a scenario in which the controller actively delivers a protocol packet to the forwarding device. This is not limited in this embodiment of this application.

According to the foregoing methods, FIG. 8 is a schematic diagram of composition of a forwarding device according to an embodiment of this application. The forwarding device includes:
a transceiver unit 100, configured to receive a protocol packet from another forwarding device or user equipment through a port; and
a processing unit 200, configured to perform virtual extensible local area network (VXLAN) encapsulation on the protocol packet to generate a first VXLAN packet, where the first VXLAN packet includes the protocol packet and port information of the port.

The transceiver unit 100 is further configured to send the first VXLAN packet to the controller.

The port is a port that is on the forwarding device and that is configured to transmit the protocol packet by using a VXLAN tunnel.

Optionally, the processing unit 200 is configured to:
generate a VXLAN header and an extension header, where the VXLAN header includes a flag bit and length information, the flag bit indicates that the extension header is added behind the VXLAN header, the length information indicates a length of the extension header, and the extension header is used to carry the port information; and encapsulate the protocol packet based on the VXLAN header and the extension header to generate the first VXLAN packet, where a payload field of the first VXLAN packet carries the protocol packet; or
encapsulate the protocol packet to generate the first VXLAN packet, where a payload field of the first VXLAN packet carries the port information and the protocol packet.

Optionally, the receiving unit 100 is further configured to receive a second VXLAN packet from the controller, where the second VXLAN packet includes a protocol response packet and the port information;
the processing unit 200 is further configured to perform VXLAN decapsulation on the second VXLAN packet to obtain the protocol response packet and the port information that are included in the second VXLAN packet; and
the receiving unit 100 is further configured to forward the protocol response packet through the port based on the port information.

Optionally, the processing unit 200 is further configured to:
establish a VXLAN tunnel with the controller, where the VXLAN tunnel serves as a transmission path of the protocol packet and the protocol response packet.

Optionally, the processing unit 200 is configured to:
negotiate tunnel information of the VXALN tunnel with the controller by using an OpenFlow protocol, and establish the VXLAN tunnel based on the negotiated tunnel information, where the tunnel information includes address information of a source VXLAN tunnel end point, address information of a destination VXLAN tunnel end point, and a VXLAN network identifier; or
establish the VXLAN tunnel through configuration.

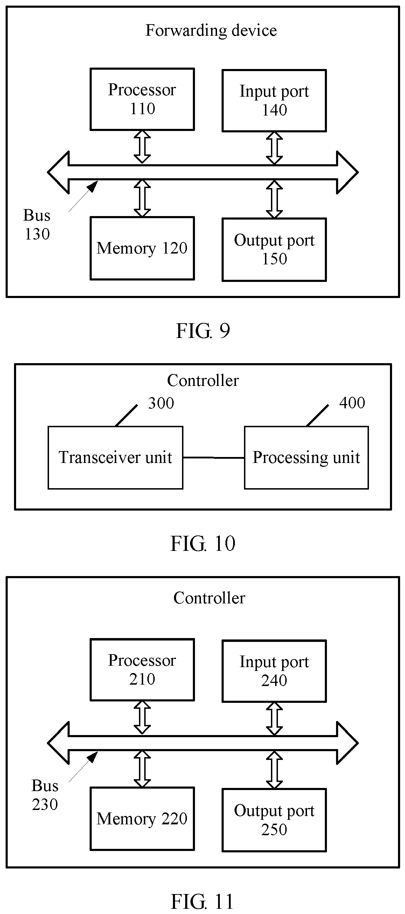

According to the foregoing methods, FIG. 9 is a schematic diagram of composition of another forwarding device according to an embodiment of this application. The forwarding device may include a processor 110, a memory 120, and a bus 130. The processor 110 is connected to the memory 120 by using the bus 130. The memory 120 is configured to store an instruction. The processor 110 is configured to execute the instruction stored in the memory 120, to implement the steps in the methods corresponding to FIG. 2 to FIG. 5.

Further, the forwarding device may further include an input port 140 and an output port 150. The processor 110, the memory 120, the input port 140, and the output port 150 may be connected by using the bus 130.

The processor 110 is configured to execute the instruction stored in the memory 120, to control the input port 140 to receive a signal and control the output port 150 to send a signal, thereby completing the steps performed by the forwarding device in the foregoing methods. The input port 140 and the output port 150 may be a same physical entity or different physical entities. When the input port 140 and the output port 150 are a same physical entity, the input port 140 and the output port 150 may be collectively referred to as an input/output port. The memory 120 may be integrated into the processor 110, or may be disposed independently of the processor 110.

In an implementation, it may be considered that functions of the input port 140 and the output port 150 are implemented by using a transceiver circuit or a dedicated transceiver chip. It may be considered that the processor 110 is implemented by using a dedicated processing chip, a processing circuit, a processor, or a universal chip.

In another implementation, it may be considered that the forwarding device provided in this embodiment of this application is implemented by using a general-purpose computer. To be specific, program code for implementing functions of the processor 110, the input port 140, and the output port 150 are stored in the memory, and a general-purpose processor implements the functions of the processor 110, the input port 140, and the output port 150 by executing the code in the memory.

It should be noted that the forwarding device in this embodiment may be a virtual forwarding device that is implemented based on a combination of a general physical server and a network function virtualization (English: Network Function Virtualization, NFV) technology. The virtual forwarding device may be a virtual machine (English: Virtual Machine, VM) on which a program having a task migration function is run. The virtual machine is deployed on a hardware device (for example, a physical server). The virtual machine is a complete computer system that is simulated by using software, has a function of a complete hardware system, and is run in a completely isolated environment.

For a concept, an explanation, a detailed description, and other steps for the forwarding device that are related to the technical solution provided in this embodiment of this application, refer to the description about the content in the foregoing methods or in other embodiments. Details are not described herein again.

A person skilled in the art may understand that for ease of description, FIG. 9 shows only one memory and only one processor. Actually, a controller may have a plurality of processors and a plurality of memories. The memory may also be referred to as a storage medium, a storage device, or the like. This is not limited in this embodiment of the present invention.

According to the foregoing methods, FIG. 10 is a schematic diagram of composition of a controller according to an embodiment of this application. The controller includes:
a transceiver unit 300, configured to receive a first virtual extensible local area network (VXLAN) packet sent by a forwarding device, where the first VXLAN packet includes a protocol packet and port information, and the port information indicates a port through which the forwarding device receives the protocol packet; and
a processing unit 400, configured to perform VXLAN decapsulation on the VXLAN packet to obtain the protocol packet and the port information that are included in the VXLAN packet.

Optionally, the processing unit 400 is further configured to:
generate a protocol response packet, and perform VXLAN encapsulation on the protocol response packet to generate a second VXLAN packet, where the second VXLAN packet carries the port information and the protocol response packet; and
the transceiver unit 300 is further configured to send the second VXLAN packet to the forwarding device.

Optionally, the processing unit 400 is configured to:
generate the protocol response packet, a VXLAN header, and an extension header based on the protocol packet, where the VXLAN header includes a flag bit and length information, the flag bit indicates that the extension header is added behind the VXLAN header, the length information indicates a length of the extension header, and the extension header is used to carry the port information; and encapsulate the protocol response packet based on the VXLAN header and the extension header to generate the second VXLAN packet, where a payload field of the second VXLAN packet carries the protocol response packet; or
generate the protocol response packet based on the protocol packet, and encapsulate the protocol response packet to generate the second VXLAN packet, where a payload field of the second VXLAN packet carries the port information and the protocol packet.

Optionally, the processing unit 400 is further configured to:
establish a VXLAN tunnel with the forwarding device, where the VXLAN tunnel serves as a transmission path of the protocol packet and the protocol response packet.

Optionally, the processing unit 400 is configured to:
negotiate tunnel information of the VXALN tunnel with the forwarding device by using an OpenFlow protocol, and establish the VXLAN tunnel based on the negotiated tunnel information, where the tunnel information includes address information of a source VXLAN tunnel end point, address information of a destination VXLAN tunnel end point, and a VXLAN network identifier; or
establish the VXLAN tunnel through configuration.

According to the foregoing methods, FIG. 11 is a schematic diagram of composition of another controller according to an embodiment of this application. The controller may include a processor 210, a memory 220, and a bus 230. The processor 210 is connected to the memory 220 by using the bus 230. The memory 220 is configured to store an instruction. The processor 210 is configured to execute the instruction stored in the memory 220, to implement the steps in the methods corresponding to FIG. 6 to FIG. 7.

Further, the controller may further include an input port 240 and an output port 250. The processor 210, the memory 220, the input port 240, and the output port 250 may be connected by using the bus 230.

The processor 210 is configured to execute the instruction stored in the memory 220, to control the input port 240 to receive a signal and control the output port 250 to send a signal, thereby completing the steps performed by the controller in the foregoing methods. The input port 240 and the output port 250 may be a same physical entity or different physical entities. When the input port 140 and the output port 150 are a same physical entity, the input port 140 and the output port 150 may be collectively referred to as an input/output port. The memory 220 may be integrated into the processor 210, or may be disposed independently of the processor 210.

In an implementation, it may be considered that functions of the input port 240 and the output port 250 are implemented by using a transceiver circuit or a dedicated transceiver chip. It may be considered that the processor 210 is implemented by using a dedicated processing chip, a processing circuit, a processor, or a universal chip.

In another implementation, it may be considered that the controller provided in this embodiment of this application is implemented by using a general-purpose computer. To be specific, program code for implementing functions of the processor 210, the input port 240, and the output port 250 are stored in the memory, and a general-purpose processor implements the functions of the processor 210, the input port 240, and the output port 250 by executing the code in the memory.

It should be noted that the controller in this embodiment may be a virtual controller that is implemented based on a combination of a general physical server and a network function virtualization (English: Network Function Virtualization, NFV) technology. The virtual controller may be a virtual machine (English: Virtual Machine, VM) on which a program having a task migration function is run. The virtual machine is deployed on a hardware device (for example, a physical server). The virtual machine is a complete computer system that is simulated by using software, has a function of a complete hardware system, and is run in a completely isolated environment.

For a concept, an explanation, a detailed description, and other steps for the controller that are related to the technical solution provided in this embodiment of this application, refer to the description about the content in the foregoing methods or other embodiments. Details are not described herein again.

A person skilled in the art may understand that for ease of description, FIG. 11 shows only one memory and only one processor. Actually, a controller may have a plurality of processors and a plurality of memories. The memory may also be referred to as a storage medium, a storage device, or the like. This is not limited in this embodiment of the present invention.

It should be understood that in the embodiments of this application, the processor may be a central processing unit (Central Processing Unit, "CPU" for short), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

The memory may include a read-only memory and a random access memory, and provide an instruction and data to the processor. A part of the memory may further include a non-volatile random access memory.

The bus may further include a power bus, a control bus, a status signal bus, and the like, in addition to a data bus. However, for clear description, various types of buses in the figure are marked as the bus.

In an implementation process, steps in the foregoing methods can be completed by using an integrated logical circuit of hardware in the processor, or by using an instruction in a form of software. The steps of the method disclosed with reference to the embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

According to the methods provided in the embodiments of this application, an embodiment of this application further provides a system. The system is applied to a network in which control is separated from forwarding and that includes the foregoing controller and forwarding device.

It should be further understood that "first", "second", "third", "fourth", and various numbers are merely used for differentiation for ease of description, and are not construed as a limitation on the scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of the present invention.

A person of ordinary skill in the art may be aware that, illustrative logical blocks (illustrative logical block) and steps (step) described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedures or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A packet transmission method, comprising:
receiving, by a forwarding device through a port, a protocol packet from another forwarding device or user equipment;
performing, by the forwarding device, virtual extensible local area network VXLAN encapsulation on the protocol packet to generate a first VXLAN packet, wherein the first VXLAN packet comprises the protocol packet and port information of the port; and
sending, by the forwarding device, the first VXLAN packet to the controller.

2. The method according to claim 1, wherein the performing, by the forwarding device, VXLAN encapsulation on the protocol packet to generate a first VXLAN packet comprises:
generating, by the forwarding device, a VXLAN header and an extension header, wherein the VXLAN header comprises a flag bit and length information, the flag bit indicates that the extension header is added behind the VXLAN header, the length information indicates a length of the extension header, and the extension header is used to carry the port information; and encapsulating the protocol packet based on the VXLAN header and the extension header to generate the first VXLAN packet, wherein a payload field of the first VXLAN packet carries the protocol packet; or
encapsulating, by the forwarding device, the protocol packet to generate the first VXLAN packet, wherein a payload field of the first VXLAN packet carries the port information and the protocol packet.

3. The method according to claim 2, further comprising:
receiving, by the forwarding device, a second VXLAN packet from the controller, wherein the second VXLAN packet comprises a protocol response packet and the port information;
performing, by the forwarding device, VXLAN decapsulation on the second VXLAN packet to obtain the protocol response packet and the port information that are comprised in the second VXLAN packet; and
forwarding, by the forwarding device, the protocol response packet through the port based on the port information.

4. The method according to claim 3, further comprising:
establishing, by the forwarding device, a VXLAN tunnel with the controller, wherein the VXLAN tunnel serves as a transmission path of the protocol packet and the protocol response packet.

5. The method according to claim 4, wherein the establishing, by the forwarding device, a VXLAN tunnel with the controller comprises:
negotiating, by the forwarding device, tunnel information of the VXALN tunnel with the controller by using an OpenFlow protocol, and establishing the VXLAN tunnel based on the negotiated tunnel information, wherein the tunnel information comprises address information of a source VXLAN tunnel end point, address information of a destination VXLAN tunnel end point, and a VXLAN network identifier; or
establishing, by the forwarding device, the VXLAN tunnel through configuration.

6. The method according to any one of claims 1 to 5, wherein the port is a port that is on the forwarding device and that is configured to transmit a protocol packet by using the VXLAN tunnel.

7. A packet transmission method, comprising:
receiving, by a controller, a first virtual extensible local area network VXLAN packet sent by a forwarding device, wherein the first VXLAN packet comprises a protocol packet and port information, and the port information indicates a port through which the forwarding device receives the protocol packet; and
performing, by the controller, VXLAN decapsulation on the first VXLAN packet to obtain the protocol packet and the port information that are comprised in the first VXLAN packet.

8. The method according to claim 7, further comprising:
generating, by the controller, a protocol response packet based on the protocol packet, and performing VXLAN encapsulation on the protocol response packet to generate a second VXLAN packet, wherein the second VXLAN packet carries the port information and the protocol response packet; and
sending, by the controller, the second VXLAN packet to the forwarding device.

9. The method according to claim 8, wherein the generating, by the controller, a protocol response packet based on the protocol packet, and performing VXLAN encapsulation on the protocol response packet to generate a second VXLAN packet comprises:
generating, by the controller, the protocol response packet, a VXLAN header, and an extension header based on the protocol packet, wherein the VXLAN header comprises a flag bit and length information, the flag bit indicates that the extension header is added behind the VXLAN header, the length information indicates a length of the extension header, and the extension header is used to carry the port information; and encapsulating the protocol response packet based on the VXLAN header and the extension header to generate the second VXLAN packet, wherein a payload field of the second VXLAN packet carries the protocol response packet; or
generating, by the controller, the protocol response packet based on the protocol packet, and encapsulating the protocol response packet to generate the second VXLAN packet, wherein a payload field of the second VXLAN packet carries the port information and the protocol packet.

10. The method according to claim 9, further comprising:
establishing, by the controller, a VXLAN tunnel with the forwarding device, wherein the VXLAN tunnel serves as a transmission path of the protocol packet and the protocol response packet.

11. The method according to claim 10, wherein the establishing, by the controller, a VXLAN tunnel with the forwarding device comprises:
negotiating, by the controller, tunnel information of the VXALN tunnel with the forwarding device by using an OpenFlow protocol, and establishing the VXLAN tunnel based on the negotiated tunnel information, wherein the tunnel information comprises address information of a source VXLAN tunnel end point, address information of a destination VXLAN tunnel end point, and a VXLAN network identifier; or
establishing, by the controller, the VXLAN tunnel through configuration.

12. A forwarding device, comprising:
a transceiver unit, configured to receive a protocol packet from another forwarding device or user equipment through a port; and
a processing unit, configured to perform virtual extensible local area network VXLAN encapsulation on the protocol packet to generate a first VXLAN packet, wherein the first VXLAN packet comprises the protocol packet and port information of the port, wherein
the transceiver unit is further configured to send the first VXLAN packet to the controller.

13. The forwarding device according to claim 12, wherein the processing unit is configured to:
generate a VXLAN header and an extension header, wherein the VXLAN header comprises a flag bit and length information, the flag bit indicates that the extension header is added behind the VXLAN header, the length information indicates a length of the extension header, and the extension header is used to carry the port information; and encapsulate the protocol packet based on the VXLAN header and the extension header to generate the first VXLAN packet, wherein a payload field of the first VXLAN packet carries the protocol packet; or
encapsulate the protocol packet to generate the first VXLAN packet, wherein a payload field of the first VXLAN packet carries the port information and the protocol packet.

14. The forwarding device according to claim 13, wherein the receiving unit is further configured to receive a second VXLAN packet from the controller, wherein the second VXLAN packet comprises a protocol response packet and the port information;
the processing unit is further configured to perform VXLAN decapsulation on the second VXLAN packet to obtain the protocol response packet and the port information that are comprised in the second VXLAN packet; and
the receiving unit is further configured to forward the protocol response packet through the port based on the port information.

15. The forwarding device according to claim 14, wherein the processing unit is further configured to:
establish a VXLAN tunnel with the controller, wherein the VXLAN tunnel serves as a transmission path of the protocol packet and the protocol response packet.

16. The forwarding device according to claim 15, wherein the processing unit is configured to:
negotiate tunnel information of the VXALN tunnel with the controller by using an OpenFlow protocol, and establish the VXLAN tunnel based on the negotiated tunnel information, wherein the tunnel information comprises address information of a source VXLAN tunnel end point, address information of a destination VXLAN tunnel end point, and a VXLAN network identifier; or
establish the VXLAN tunnel through configuration.

17. The forwarding device according to any one of claims 12 to 16, wherein the port is a port that is on the forwarding device and that is configured to transmit a protocol packet by using the VXLAN tunnel.

18. A controller, comprising:
a transceiver unit, configured to receive a first virtual extensible local area network VXLAN packet sent by a forwarding device, wherein the first VXLAN packet comprises a protocol packet and port information, and the port information indicates a port through which the forwarding device receives the protocol packet; and
a processing unit, configured to perform VXLAN decapsulation on the VXLAN packet to obtain the protocol packet and the port information that are comprised in the VXLAN packet.

19. The controller according to claim 18, wherein the processing unit is further configured to: generate a protocol response packet based on the protocol packet, and perform VXLAN encapsulation on the protocol response packet to generate a second VXLAN packet, wherein the second VXLAN packet carries the port information and the protocol response packet; and
the transceiver unit is further configured to send the second VXLAN packet to the forwarding device.

20. The controller according to claim 19, wherein the processing unit is configured to:
generate the protocol response packet, a VXLAN header, and an extension header based on the protocol packet, wherein the VXLAN header comprises a flag bit and length information, the flag bit indicates that the extension header is added behind the VXLAN header, the length information indicates a length of the extension header, and the extension header is used to carry the port information; and encapsulate the protocol response packet based on the VXLAN header and the extension header to generate the second VXLAN packet, wherein a payload field of the second VXLAN packet carries the protocol response packet; or
generate the protocol response packet based on the protocol packet, and encapsulate the protocol response packet to generate the second VXLAN packet, wherein a payload field of the second VXLAN packet carries the port information and the protocol packet.

21. The controller according to claim 20, wherein the processing unit is further configured to:
establish a VXLAN tunnel with the forwarding device, wherein the VXLAN tunnel serves as a transmission path of the protocol packet and the protocol response packet.

22. The controller according to claim 21, wherein the processing unit is configured to:
negotiate tunnel information of the VXALN tunnel with the forwarding device by using an OpenFlow protocol, and establish the VXLAN tunnel based on the negotiated tunnel information, wherein the tunnel information comprises address information of a source VXLAN tunnel end point, address information of a destination VXLAN tunnel end point, and a VXLAN network identifier; or
establish the VXLAN tunnel through configuration.

23. A system, applied to a network in which control is separated from forwarding, wherein the system comprises:
the forwarding device according to any one of claims 12 to 17; and
the controller according to any one of claims 18 to 22.

24. A forwarding device, comprising:
a processor, a memory, and a bus, wherein the processor and the memory are connected by using the bus, the memory is configured to store a group of program code, and the processor is configured to invoke the program code stored in the memory to execute the step according to any one of claims 1 to 6.

25. A controller, comprising:
a processor, a memory, and a bus, wherein the processor and the memory are connected by using the bus, the memory is configured to store a group of program code, and the processor is configured to invoke the program code stored in the memory to execute the step according to any one of claims 7 to 11.
